(19) Europäisches Patentamt
European Patent Office
Office européen des brevets

(11) Publication number: **0 332 429 A2**

(12) # EUROPEAN PATENT APPLICATION

(21) Application number: **89302319.2**

(22) Date of filing: **08.03.89**

(51) Int. Cl.[4]: **C 08 L 67/02**
//(C08L67/02,51:00)

(30) Priority: **09.03.88 JP 55658/88**

(43) Date of publication of application:
**13.09.89 Bulletin 89/37**

(84) Designated Contracting States:
**AT BE CH DE ES FR GB GR IT LI LU NL SE**

(71) Applicant: **POLYPLASTICS CO. LTD.**
**3-13, Azuchi-machi 2-chome**
**Chuo-Ku Osaka-shi (JP)**

(72) Inventor: **Mochizuki, Mitsuhiro**
**945-3, Temma**
**Fuji-shi Shizuoka (JP)**

**Wada, Mitsuo**
**109-9-202, Heigaiki**
**Fuji-shi Shizuoka (JP)**

(74) Representative: **Jackson, Peter et al**
**HYDE, HEIDE & O'DONNELL 146 Buckingham Palace Road**
**London SW1W 9TR (GB)**

(54) **Thermoplastic polyester resin composition.**

(57) A thermoplastic polyester resin composition comprises (A) a thermoplastic polyester and a graft copolymer comprising (a) an olefin copolymer comprising an α-olefin and an αβ-unsaturated acid glycidyl ester and (b) one or more (co)polymers mainly comprising repeating units represented by the following general formula (1), wherein said copolymer (a) and said (co)polymers (b) are chemically bonded to each other to form a branched or crosslinked structure:

$$-(--CH_2--\overset{\displaystyle R}{\underset{\displaystyle X}{C}}--)-- \qquad (1)$$

in which R is hydrogen or a lower alkyl and X is carboxyl, a carboxyl ester with an alkyl, phenyl or cyano, and is improved in impact resistance, heat resistance and mouldability.

EP 0 332 429 A2

## Description

# THERMOPLASTIC POLYESTER RESIN COMPOSITION

The present invention relates to a thermoplastic polyester resin composition. Particularly, it relates to a polyester resin composition which is improved in impact resistance and is excellent in heat resistance and moldability.

[Prior Art]

Although a thermoplastic polyester resin has excellent mechanical and electrical properties and is excellent in chemical resistance and processability, so that it has been widely used in the production of components for automobiles, electric and electronic equipment, business machines, other precesion machines, building material, sundries and the like, enhanced levels of properties are sometimes required depending upon the use. One of such properties is an enhanced impact resistance.

For the purpose of improving the impact resistance of a polyester resin, many studies have been made heretofore to propose various methods. For example, there have been proposed a method of adding an ethylene-vinyl acetate copolymer (see Japanese Patent Publication No 26223/1970), a method of adding a butadiene-butyl acrylate copolymer (see Japanese Patent Publication No 26224/1970) and a method of adding an ionic ethylene-sodium methacrylate copolymer (see Japanese Patent Publication No 26225/1970). However, these additives are poor in affinity for a polyester resin and are mostly insufficient in heat resistance, so that it is difficult to improve the impact resistance sufficiently by these methods. Further, the addition of the copolymers gives a composition which is remarkably lowered is stiffness, modulus, thermal deformation temperature and the like.

Further, Japanese Patent Laid-Open Nos. 32045/1977 and 144452/1976 disclosed a method of adding an olefin copolymer comprising an α-olefin, and α,β-unsaturated acid glycidyl ester and, if necessary, a third monomer such as vinyl acetate or acrylate. Although this method exhibited an appreciable effect, the obtained composition was still insufficient in impact strength so that an additional improvement is demanded in many cases.

[Summary of the Invention]

For the purpose of improving the impact resistance of a thermoplastic polyester, the inventors of the present invention have eagerly studied to further enhance the abovementioned effect due to the addition of the olefin copolymer comprising an α-olefin and an α,β-unsaturated acid glycidyl ester and have found that the impact resistance can be remarkably enhanced by adding not an α-olefin-α,β-unsaturated acid glycidyl ester copolymer, but a graft copolymer obtained by chemically bonding a specified polymer to the copolymer to form a branched or crosslinked chain. The present invention has been accomplished on the basis of this finding.

Namely, the present invention relates to a thermoplastic polyester resin composition comprising

(A) 100 parts by weight of a thermoplastic polyester resin,

(B) 0.5 to 80 parts by weight of a graft copolymer comprising (a) an olefin copolymer comprising an α-olefin and an α,β-unsaturated acid glycidyl ester and (b) one or more (co)polymers mainly comprising repeating units represented by the following general formula (1), wherein said copolymer(a) and said (co)polymers(b) are chemically bonded to each other to form a branched or crosslinked structure:

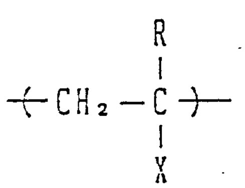

(1)

wherein R stands for a hydrogen atom or a lower alkyl group and X stands for one or more groups selected from among

carboxyl, a carboxyl ester with an alkyl having 1 to 8 carbon atoms, phenyl and cyano, preferably

$-COOH$, $-COOCH_3$, $-COOC_2H_5$, $-COOC_4H_9$, $-COOCH_2CH(C_2H_5)C_4H_9$,

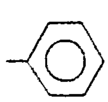

and -CN

and

(C) 0 to 200 parts by weight of an inorganic filler.

The thermoplastic polyester resin (A) to be used in the present invention may be any one prepared by the polycondensation of a dicarboxylic acid with a dihydroxy compound, that of a hydroxy carboxylic acid or that of these three compounds and includes homopolyesters and copolyesters.

Examples of the dicarboxylic acid to be used in the preparation of the thermoplastic polyester resin (A) include conventional dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids, and alkyl-, alkoxy- or halogen-substituted derivatives thereof. Further, these dicarboxylic acids may be used as their ester-forming derivatives, for example, esters thereof with lower alcohols (such as dimethyl eters). According to the present invention, one or more compounds selected from among those described above may be used.

Examples of the dihydroxy compound include dihydroxy compounds such as ethylene glycol, propylene glycol, butanediol, neopentyl glycol, butenediol, hydroquinone, resorcinol, dihydroxydiphenyl ether, cyclohexanediol and 2,2-bis(4-hydroxyphenyl)propane; polyoxyalkylene glycols and alkyl-, alkoxy- or halogen-substituted derivatives thereof. According to the present invention, one or more compounds selected from among those described above may be used.

Examples of the hydroxy carboxylic acid include hydroxy carboxylic acids such as hydroxybenzoic, hydroxynaphthoic and hydroxydiphenylenecarboxylic acids and alkyl-, alkoxy-or halogen-substituted derivatives thereof. Further, ester-forming derivatives of these compounds may be used as the hydroxy carboxylic acid. According to the present invention, one or more compounds selected from among those described above may be used.

Any of the thermoplastic polyesters prepared by the polycondensation of compounds as described above may be used in the present invention either alone or as a mixture of two or more of them. It is preferable to use a polyester mainly comprising polyalkylene terephthalate, still preferably one mainly comprising polybutylene terephthalate and when such a polyester is used, the effect of the present invention is particularly remarkable.

Alternatively, it is also possible to use a thermoplastic polyester modified by conventional crosslinking, graft polymerization or the like in the present invention.

The graft copolymer (B) to be used in the present invention is one comprising (a) an olefin copolymer comprising an α-olefin and an α,β-unsaturated acid glycidyl ester and (b) one or more (co)polymers mainly comprising repeating units represented by the following general formula (1), wherein said copolymer (a) and said (co)polymers are chemically bonded to each other to form a branched or crosslinked structure:

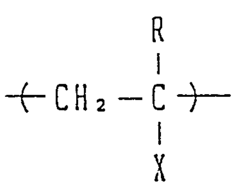

(1)

wherein R stands for a hydrogen atom or a lower alkyl group and X stands for one or more groups selected from among

$-COOH$, $-COOCH_3$, $-COOC_2H_5$, $-COOC_4H_9$, $-COOCH_2CH(C_2H_5)C_4H_9$,

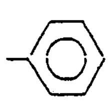

and -CN

The α-olefin which is one of the monomers constituting the olefin copolymer(a) includes ethylene, propylene and butene-1, among which ethylene is preferred. The α,β-unsaturated acid glycidyl ester which is the other of the monomers constituting the copolymer(a) is a compound represented by the general formula:

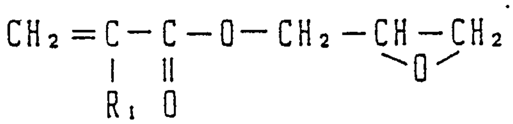

(2)

wherein $R_1$ stands for a hydrogen atom or a lower alkyl group,
and examples thereof include glycidyl acrylate, glycidyl methacrylate and glycidyl ethacrylate, among which glycidyl methacrylate is particularly preferred. The copolymer (a) can be prepared by copolymerizing an α-olefin (such as ethylene) with an αβ-unsaturated acid glycidyl ester by conventional radical polymerization.

It is preferred that the segments of the copolymer (a) comprise 70 to 99 % by weight of the α-olefin and 30 to 1 % by weight of the unsaturated acid glycidyl ester.

The (co)polymer (b) to be grafted onto the olefin copolymer (a) is a homopolymer comprising one kind of repeating unit represented by the general formula (1) or a copolymer comprising two or more kinds of repeating unit represented thereby. Examples of the (co)polymer (b) include polymethyl methacrylate, polyethyl acrylate, polybutyl acrylate, poly 2-ethylhexyl acrylate, polystyrene, polyacrylonitrile, acrylonitrile-styrene copolymers, butyl acrylate-methyl methacrylate copolymers and butyl acrylate-styrene copolymers. These (co)polymers (b) can be each prepared by the radical polymerization of corresponding vinyl monomer(s).

The component (B) to be characteristically used in the present invention is neither the olefin copolymer (a) alone nor the (co)polymer (b) alone, but a graft copolymer comprising the olefin copolymer (a) and the (co)polymer (b), wherein both the components are chemically bonded to each other at at least one position to form a branched or crosslinked structure. According to the present invention, a remarkable effect which cannot be attained by the use of either of the components(a) and (b) alone can be attained by the use of a graft copolymer as described above.

Although the process for the preparation of the graft copolymer comprising the segments (a) and (b) is not particularly limited, the graft copolymer can be easily prepared by radical reaction. For example, a polymer (b) is reacted with a peroxide to generate free radicals therein and the resulting polymer is kneaded with a copolymer (a) to obtain a graft copolymer (B). The ratio of the segment (a) to the one (b) in the graft copolymer (B) is between 95 : 5 and 40 : 60.

The component (B) is used in an amount of 0.5 to 80 parts by weight, preferably 1 to 50 parts by weight, per 100 parts by weight of the component(A).

If the amount of the component (B) is too small, the objective improvement in the toughness and impact resistance will not be attained, while if the amount thereof is too large, the thermal deformation temperature will be lowered and the mechanical properties such as stiffness will be adversely affected.

Although the inorganic filler (C) is not always essential in the present invention, the addition thereof is effective in obtaining a molded article which is excellent in mechanical strengths, heat resistance, dimensional stability (resistance to deformation or warping) and electrical characteristics. The inorganic filler (C) may be selected from among fibrous, powdery, granular and lamellar ones, depending upon the subject.

The fibrous filler includes inorganic fibrous materials such as glass fiber, asbestos fiber, carbon fiber, silica fiber. silica-alumina fiber, zirconia fiber, boron nitride fiber, silicon nitride fiber, boron fiber, potassium titanate fiber and fibers of metals such as stainless steel, aluminium, titanium, copper or brass, among which glass fiber and carbon fiber are particularly representative. Further, it is possible to use a high-melting organic fibrous material such as polyamide, flouroresin or acrylic resin as well as an inorganic fibrous fiber as described above.

Examples of the powdery or granular filler include carbon black, silica, quartz powder, glass bead, glass powder, silicates such as calcium silicate, aluminium silicate, kaolin, talc, clay, diatomaceous earth and wollastonite, metal oxides such as iron oxides, titanium oxide, zinc oxide and alumina; metal carbonates such as calcium carbonate and magnesium carbonate, metal sulfates such as calcium sulfate and barium sulfate, silicon carbide, silicon nitride, boron nitride and various metal powders.

The lamellar filler includes mica, glass flake and various metal foils.

These inorganic fillers may be used alone or as a mixture of two or more of them. The combination of a fibrous filler, particularly glass fiber or carbon fiber, with a granular and/or lamellar filler is preferred for producing an article which is excellent in both mechanical strength and dimensional accuracy and electrical properties.

If necessary, a coupling agent or a surface treatment may be used together with a filler as described above. Examples thereof include functional compounds such as epoxy, isocyanate, silane and titanate compounds. These compounds may be preliminarily applied to the filler or may be added together with the filler in the preparation of the composition.

The amount of the inorganic filler (C) used per 100 parts by weight of the polyester resin (A) is 0 to 200 parts by weight and may be suitably selected depending upon the object or the kind of the additives. For example, when the object is to enhance the mechanical strength (such as stiffness), the amount is preferably 5 to 200 parts by weight, still preferably 10 to 150 parts by weight. If the amount of the inorganic filler is too small, the mechanical strength will be slightly poor, while if it is too large, the moldability of the resulting composition will be poor and the molded article made thereof will be problematic in mechanical strengths.

The composition of the present invention may further contain other thermoplastic resin as an auxiliary component in addition to the above components depending upon the object. The thermoplastic resin may be any one as far as it is stable at high temperature. Examples thereof include polyamide, polycarbonate, polyphenylene sulfide, polyphenylene oxide, polyacetal, polysulfone, polyether sulfone, polyether imide, polyether ketone and fluororesins. These resins may be also used as a mixture of two or more of them.

Further, the composition of the present invention may suitably contain, depending upon the required

performance, additives which are generally used in a thermoplastic or thermosetting resin. Examples of such additives include stabilizers such as antioxidant or ultraviolet absorber; antistatic, flame retardant, coloring agent such as dye and pigment; lubricant, crystallization accelerator and nucleating agent.

The polyester resin composition of the present invention can be prepared with conventional equipment for the preparation of a synthetic resin composition by a conventional process therefor. That is, necessary components are mixed and kneaded and extruded with a single- or twin-screw extruder to obtain a molding pellet. In this process, a master batch prepared by preliminarily mixing a part of the components may be mixed with the residual part thereof, followed by the molding. Alternatively, a part or the whole of the resin components may be pulverized prior to mixing and extrusion.

[Example]

The present invention will now be further described in more detail by referring to the following Examples, though it is not limited by them at all.

Examples 1 to 10 and Comparative Examples 1 to 15

Polybutylene terephthalate (PBT) or polyethylene terephthalate (PET) as the component (A) was mixed with a graft copolymer as the component (B) selected from among those given in Tables 1 to 3 and, if necessary, glass fiber (diameter: 13 µm, length: 6 mm) as the component (C) each in a ratio given in Tables 1 to 3. The obtained mixture was kneaded with an extruder to obtain a pellet. This pellet was injection-molded into a test piece. This test piece was examined for physical properties. The results are shown in Tables 1 to 3. For comparison, a composition not containing any graft copolymer as the component (B), a composition containing only the component (a) which is one constituent of the component (B) and a composi tion containing only the component (b) which is the other constituent thereof were prepared and examined in a similar manner to the one described above.

The results are also shown in Tables 1 to 3.

The examination items and test methods are as follows:

tensile characteristics: determined according to ASTM D-638

Izod impact strength: determined according to
(notched) ASTM D-256

thermal deformation temperature:
determined according to ASTM D-648
(load: 18.6 kg/cm$^2$)

The components (B) and their constituents (a) and (b) used are as follows, and they are shown by abbreviations in Tables 1 to 3.

(Abbreviations) Material and composition)

(a) E/GMA : ethylene-glycidyl methacrylate (85:15) copolymer

(b) AN/S : acrylonitrile-styrene copolymer

PMMA : polymethyl methacrylate

E/GMA-g-AN/S: E/GMA(70)/acrylonitrile-stylene copolymer(30) graft copolymer

(B)

E/GMA-g-PS:

E/GMA(70)/polystyrene(30) graft copolymer

E/GMA-g-PMMA:

E/GMA(70)/polymethyl methacrylate(30) graft copolymer

E/GMA-g-MMA/BA:

E/GMA(70)/methyl methacrylate-butyl acrylate copolymer(30) graft copolymer

E/GMA-g-BA/S/MMA:

E/GMA(70)/butyl acrylate-styrene-methyl methacrylate copolymer(30) graft copolymer

The composition of the invention is remarkably improved in impact resistance as compared with the one of the prior art without adversely affecting the other physical properties thereof substantially, so that it is promising as a material suitable for various machinery components.

Table 1

| | | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|---|
| (A) | PBT | (pts.wt.) | 90 | 90 | 90 | 90 | 90 | 100 | 90 | 90 | 90 |
| (B) | E/GMA-g-AN/S | ( 〃 ) | 10 | — | — | — | — | — | — | — | — |
| | E/GMA-g-PS | ( 〃 ) | — | 10 | — | — | — | — | — | — | — |
| | E/GMA-g-PMMA | ( 〃 ) | — | — | 10 | — | — | — | — | — | — |
| | E/GMA-g-MMA/BA | ( 〃 ) | — | — | — | 10 | — | — | — | — | — |
| | E/GMA-g-BA/S/MMA | ( 〃 ) | — | — | — | — | 10 | — | — | — | — |
| (a) | E/GMA | ( 〃 ) | — | — | — | — | — | — | 10 | — | — |
| (b) | AN/S | ( 〃 ) | — | — | — | — | — | — | — | 10 | |
| | PMMA | ( 〃 ) | — | — | — | — | — | — | — | — | 10 |
| Physical properties | Izod impact strength, notched | (kg · cm/cm) | 16.4 | 16.2 | 16.0 | 18.5 | 17.0 | 3.5 | 10.5 | 2.4 | 2.7 |
| | tensile strength | (kg/cm²) | 532 | 515 | 528 | 504 | 508 | 582 | 460 | 608 | 602 |
| | tensile elongation | (%) | 200< | 200< | 200< | 200< | 200< | 200< | 200< | 85 | 90 |

Table 2

| | | | Ex. 6 | Comp. Ex. 5 | Comp. Ex. 6 | Ex. 7 | Comp. Ex. 7 | Comp. Ex. 8 |
|---|---|---|---|---|---|---|---|---|
| (A) | PBT | (pts.wt.) | 95 | 95 | 95 | 80 | 80 | 80 |
| (B) | E/GMA-g-AN/S | ( 〃 ) | 5 | — | — | 20 | — | — |
| | E/GMA-g-PS | ( 〃 ) | — | — | — | — | — | — |
| | E/GMA-g-PMMA | ( 〃 ) | — | — | — | — | — | — |
| | E/GMA-g-MMA/BA | ( 〃 ) | — | — | — | — | — | — |
| | E/GMA-g-BA/S/MMA | ( 〃 ) | — | — | — | — | — | — |
| (a) | E/GMA | ( 〃 ) | — | 5 | — | — | 20 | — |
| (b) | AN/S | ( 〃 ) | — | — | 5 | — | — | 20 |
| | PMMA | ( 〃 ) | — | — | — | — | — | — |
| Physical properties | Izod impact strength notched | (kg・cm/cm) | 7.4 | 5.0 | 2.8 | 24.3 | 15.8 | 2.2 |
| | tensile strength | (kg/cm²) | 551 | 510 | 598 | 471 | 402 | 620 |
| | tensile elongation | (%) | 200 < | 200 < | 124 | 200 < | 200 < | 48 |

Table 3

| | | | Ex. 8 | Ex. 9 | Comp. Ex. 9 | Comp. Ex. 10 | Comp. Ex. 11 | Comp. Ex. 12 | Ex. 10 | Comp. Ex. 13 | Comp. Ex. 14 | Comp Ex. |
|---|---|---|---|---|---|---|---|---|---|---|---|---|
| (A) | PBT | (pts.wt.) | 70 | 70 | 80 | 70 | 70 | 70 | — | — | — | – |
| | PET | ( 〃 ) | — | — | — | — | — | — | 70 | 80 | 70 | 70 |
| (B) | E/GMA-g-AN/S | ( 〃 ) | 10 | — | — | — | — | — | 10 | — | — | – |
| | E/GMA-g-PMMA | ( 〃 ) | — | 10 | — | — | — | — | — | — | — | – |
| (a) | E/GMA | ( 〃 ) | — | — | — | 10 | — | — | — | — | 10 | – |
| (b) | AN/S | ( 〃 ) | — | — | — | — | 10 | — | — | — | — | 10 |
| | PMMA | ( 〃 ) | — | — | — | — | — | 10 | — | — | — | |
| (C) | glass fiber (diameter: 13 μm, length: 6 mm) | ( 〃 ) | 20 | 20 | 20 | 20 | 20 | 20 | 20 | 20 | 20 | 20 |
| Physical properties | Izod impact strength, notched | (kg・cm/cm) | 20.5 | 19.3 | 6.5 | 14.1 | 5.8 | 5.5 | 18.8 | 4.8 | 12.3 | 4.2 |
| | tensile strength | (kg/cm²) | 1010 | 1000 | 1120 | 960 | 1170 | 1165 | 1085 | 1250 | 1010 | 1290 |
| | tensile elongation | (%) | 8.3 | 8.5 | 2.6 | 6.4 | 2.3 | 2.5 | 7.9 | 1.9 | 4.8 | 1.6 |
| | thermal deformation temperature | (℃) | 206 | 206 | 209 | 201 | 205 | 206 | 217 | 220 | 211 | 216 |

## Claims

1. A thermoplastic polyester resin composition comprising:

(A) 100 parts by weight of a thermoplastic polyester resin,

(B) 0.5 to 80 parts by weight of a graft copolymer comprising (a) an olefin copolymer comprising an α-olefin and an α,β-unsaturated acid glycidyl ester and (b) one or more (co)polymers mainly comprising repeating units represented by the following general formula (1), wherein said copolymer (a) and said (co)polymers (b) are chemically bonded to each other to form a branched or crosslinked structure:

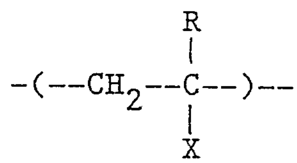

(1)

wherein R stands for a hydrogen atom or a lower alkyl group and X stands for one or more groups selected from among carboxyl, carboxyl ester with an alkyl having 1 to 8 carbon atoms, phenyl and cyano,
and

(C) 0 to 200 parts by weight of an inorganic filler.

2. A thermoplastic polyester resin composition as set forth in claim 1, wherein said thermoplastic polyester resin is one mainly comprising polybutylene terephthalate.

3. A thermoplastic polyester resin composition as set forth in claim 1 or 2, wherein the olefin copolymer (a) constituting the component (B) is a copolymer comprising ethylene and an α,β unsaturated glycidyl ester.

4. A thermoplastic polyester resin composition as set forth in any preceding claim, wherein the α,β-unsaturated acid glycidyl ester in the olefin copolymer (a) is glycidyl methacrylate.

5. A thermoplastic polyester resin composition as set forth in any preceding claim, wherein the olefin copolymer (a) comprises 70 to 99% by weight of the α-olefin and 30 to 1 % by weight of the α,β-unsaturated acid glycidyl ester.

6. A thermoplastic polyester resin composition as set forth in any preceding claim, wherein X in the general formula (1) for the (co)polymer (b) is selected from the group consisting of: -COOH, $COOCH_3$, $-COOC_2H_5$, $-COOC_4H_9$, $COOCH_2CH(C_2H_5)C_4H_9$,

$-COOH$, $-COOCH_3$, $-COOC_2H_5$, $-COOC_4H_9$,

$-COOCH_2CH(C_2H_5)C_4H_9$, 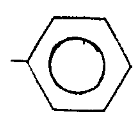 and -CN

and -CN

7. A thermoplastic polyester resin composition as set forth in any preceding claim, wherein the polymer (b) is a homopolymer comprising one kind of repeating unit represented by the general formula (1).

8. A thermoplastic polyester resin composition as set forth in any of the claims 1 to 6, wherein the polymer (b) is a copolymer comprising two or more kinds of repeating unit represented by the general formula (1).

9. A thermoplastic polyester resin composition as set forth in any preceding claim, in which the proportion of component (B) is 1 to 50 parts by weight per 100 parts by weight of the compound (A).

10. A thermoplastic polyester resin composition as set forth in any preceding claim, in which the proportion of component (C) is 10 to 150 parts by weight per 100 parts by weight of the component (A).